**Europäisches Patentamt**

(19) **European Patent Office**

**Office européen des brevets**

(11) Veröffentlichungsnummer: **0 093 269**
**B1**

(12) EUROPÄISCHE PATENTSCHRIFT

(45) Veröffentlichungstag der Patentschrift:
29.01.86

(21) Anmeldenummer: 83103256.0

(22) Anmeldetag: 05.04.83

(51) Int. Cl.⁴: **A 01 K 97/00, B 65 H 75/04,**
**B 65 D 85/04**

(54) **Vorrats- und Spendedose für Angelschnüre oder ähnliche Fäden.**

(30) Priorität: 05.04.82 DE 3212650

(43) Veröffentlichungstag der Anmeldung:
09.11.83 Patentblatt 83/45

(45) Bekanntmachung des Hinweises auf die Patenterteilung:
29.01.86 Patentblatt 86/5

(84) Benannte Vertragsstaaten:
**AT BE CH DE FR GB IT LI LU NL SE**

(56) Entgegenhaltungen:
**FR - A - 1 032 648**
**US - A - 1 725 684**
**US - A - 2 463 009**
**US - A - 2 514 697**
**US - A - 3 011 735**
**US - A - 3 062 475**

(73) Patentinhaber: **Schreck, Ursula, Urbachstrasse 32,**
**D-3559 Bottendorf (DE)**

(72) Erfinder: **Der Erfinder hat auf seine Nennung verzichtet**

(74) Vertreter: **Olbricht, Karl Heinrich, Dipl.-Phys., Am**
**Weinberg 15, D-3556 Niederweimar (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

# Beschreibung

Die Erfindung betrifft eine Vorrichtung gemäss dem Oberbegriff von Anspruch 1.

Für das Angeln mit Fliegen oder sonstigen Angelködern wird in der Regel zwischen Angelschnur-Ende und Haken ein Stück Angelschnur zwischengeknotet, das den momentanen Bedürfnissen gerade entspricht. Sonst müsste ständig die gesamte Hauptschnur den besonderen Bedürfnissen nach Stärke bzw. Gewicht und Länge angepasst werden, was einen sehr grossen Bevorratungsaufwand bedeuten würde. Dieses benötigte, zwischengeknotete Stück Angelschnur von z.B. 1 bis 3 m Länge wird Vorfach genannt. Es unterliegt einem grossen Verschleiss, soll aber auch im Falle eines Bodenhängers die Abrissstelle sein und somit die teure Hauptschnur über längere Zeit in möglichst voller Länge erhalten helfen. Je nach Empfindlichkeit der Fische kann ein häufiger Wechsel des Vorfachdurchmessers erforderlich werden.

Daraus geht hervor, dass das Vorfach aus verschiedenen Gründen sehr oft gewechselt werden muss. In der Vergangenheit führte man für jede Schnurstärke eine eigene Schnurspule lose mit, von der die Schnur oft in Klängen ungewollt heruntersprang, was für ein erhebliches Durcheinander in den Angeltaschen sorgte. Ausserdem steht hauptsächlich beim Fliegenfischen nur ein begrenzter Raum für die Aufbewahrung benötigter Angelutensilien zur Verfügung.

Herkömmliche Vorfachdosen haltern mehrere Spulen jeweils auf festen Zapfen in jeder der klappbaren oder Rücken an Rücken angeordneten Dosenhälften. Die Spulen drehen oft zu leicht oder zu schwer; herabspringende Schnurwindungen (Klänge) führen zum Kringeln oder zu «Schnursalat». Aussen überstehende Klemmstücke oder -federn sollen das betreffende Schnur-Ende festhalten. In der Praxis kann sich die vermeintlich geklemmte Schnur leicht lösen, so dass sie sich frei herausziehen lässt (wozu das Hängenbleiben irgendwo genügt, sei es an einem Knopf, einem Zweig oder jedem anderen Gegenstand). Umgekehrt kann das zurückbleibende Ende nach innen durchrutschen. Die vorragenden Klemmstücke bzw. federnden Fadenschneider können Verletzungen bewirken.

Eine Vorrats- und Spendevorrichtung gemäss der DE-OS Nr. 2706970 hat ein Gehäuse mit Deckel über Kammern, die eine Anzahl von Spulenkörpern an wenigstens einer Seite einer Bodenplatte aufnehmen. Begrenzende Seitenwände enthalten jeweils ein geschlitztes Klemmstück aus Gummi oder Weichplastik. Durch den Schlitz soll sich ein gewünschtes Schnurstück herausziehen lassen. Das nach dem Abschneiden zurückbleibende Ende soll im Klemmstück gehalten sein, was jedoch je nach Schnurstärke, Glätte des Fadens, Feuchte an den Klemmflächen usw. keineswegs gleichmässig der Fall ist. Die nebeneinander angeordneten Kammern beanspruchen viel Raum, und die Spendedose ist demgemäss wenig handlich und nicht leicht. Auch können die Deckel verlorengehen.

Aufgabe der Erfindung ist es, die aufgeführten und weitere Nachteile des Standes der Technik zu überwinden und eine Dose der genannten Art so zu verbessern, dass man die benötigten Vorfächer in beliebigen Stärken oder Durchmessern in sinnvoller Ordnung speichern und bei Bedarf die benötigte Menge Schnur ohne Beschädigung freigeben, abschneiden und den verbleibenden, hervorstehenden Schnurrest bis zum nächsten Benötigtwerden festhalten kann. Die Dose soll klein und handlich sein, sicher funktionieren, verrottungsfest sowie nicht kälte- oder wärmeempfindlich sein, sich leicht reinigen lassen und gewährleisten, dass beim Gebrauch keine Verletzungen entstehen.

Der Grundgedanke der erfindungsgemässen Vorrats- und Spendedose ist im kennzeichnenden Teil von Anspruch 1 angegeben. Ausgestaltungen der Erfindung sind Gegenstand der Ansprüche 2 bis 10.

Man erkennt, dass in der erfindungsgemässen Dose mindestens eine Schnur, möglichst aber mehrere verschieden starke Angelschnüre oder ähnliche Fäden auf kleinstmöglichem Raum spendebereit untergebracht sind. Dies geschieht durch Spulenkörper von unterschiedlicher Grösse, die im Gehäuse bzw. im Deckel ineinandergeschachtelt sind und durch eine Verschraubung drehfest gehalten werden. Die zwischen den Umfangslinien der Spulenkörper abzuziehenden Schnüre oder Fäden werden sowohl während des Abziehens als auch während des Nichtgebrauchs durch die Reibkraft (Klemmung) der Spulenränder aneinander vor dem Zurückfallen in die Spule und vor unbeabsichtigtem Herausfallen gehindert. Die jeweils benötigte, abgezogene Schnurlänge kann an einem Fadenschneider abgetrennt werden.

Zwar ist in der US-A Nr. 3011735 bereits eine Vorrats- und Spendedose für Angelschnüre offenbart, bei der eine Anzahl von konzentrisch ineinanderfügbaren Spulenkörpern jeweils mit einer Anzahl von ringförmigen Wickelfächern versehen ist. Die Anordnung erfordert jedoch eine stationäre Befestigungsvorrichtung mit einer Kurbel, die durch den mittleren Teil bzw. den innersten Spulenkörper hindurch zu stecken ist. Die in den Wickelfächern liegenden Angelschnüre lassen sich nicht unmittelbar verwenden, sondern müssen jeweils auf einen Schnurkörper umgespult werden. Aufbau und Verwendungsweise unterscheiden sich damit grundlegend von der erfindungsgemässen Vorrats- und Spendedose. Letztere ermöglicht es, Vorfächer in einer kleinen und handlichen Dose übersichtlich zu speichern, die sich ohne zusätzliche Hilfsmittel zum direkten Gebrauch eignet.

Bevorzugt ist die Spendedose nach der Erfindung mit abnehm- oder zerlegbaren Scharnieren versehen und/oder baukastenartig erweiterbar.

Zur Montage wird in ein Gehäuse mit definierter Höhe von z.B. 15 bis 20 mm die mit der gewünschten Schnur gefüllte, grösste Spule eingelegt. Ein etwa 2 cm langes Stück der Schnur muss zwischen den Berührungsrändern des Gehäuses und des Säulenkörpers hervorstehen. Anschliessend legt man eine nächstkleinere Spule mit dem darauf aufgewickelten Schnurvorrat in den Hohlraum der grossen Spule ein. Diesen Vorgang wiederholt man, bis alle Spulen ineinander verschachtelt sind und nur die Schnurenden zwischen den Berührungsrändern jeweils hervorstehen.

Durch eine zentrale Verschraubung wird eine bestimmte Anpresskraft zwischen dem Gehäuse und den einzelnen Spulenkörpern erzeugt. Dank Markierungen, vorzugweise zwischen der innersten Spule und der Zentralbuchse, lässt sich die Druckkraft reproduzierbar einstellen. Jede Schnur wird also zwischen den benachbarten Berührungsrändern jeweils mit gleicher Kraft eingeklemmt und gehalten. Die Einstellung der Klemmkraft wird unterstützt durch die Elastizität (Federwirkung) scheibenförmiger Grundplatten der Spulenkörper, die an den Unterflächen aussen nur linienförmig abgestützt und in der Mitte zusammendrückbar sind.

Wird Schnur von einer der Spulen benötigt, so wird das herausragende Ende erfasst und in Axialrichtung herausgezogen; die gewünschte Länge wird am Fadenschneider abgetrennt. Der verbleibende Schnurrest wird nach dem Trennen bis zum nächsten Abziehen in Position gehalten; die Klemmung kann durch Tangieren oder Überlappen zweier benachbarter Bauteile geschehen.

Ein Verdrehen der einzelnen Spulenkörper gegenüber dem Gehäuse würde die Schnüre verheddern lassen. Um dies zu vermeiden, sieht die Erfindung eine Verdrehsicherung vor, beispielsweise in Form einer an der Zentralbuchse radial angebrachten Nase und einer korrespondierenden Ausnehmung am Gehäuse sowie an den Spulenkörpern.

Bei montierter Dose steht die Zentralbuchse aus einem Gegenstück, mit dem sie schraubt, noch etwas vor. An dem vorragenden Teil kann ein Schneidenträger auswechselbar angebracht sein, um dessen Schneidkante die abzutrennende Schnurlänge herumgelegt und durch einen kurzen Ruck getrennt wird. Eine Abdeckung, z.B. in Form eines Kopfes oder Wulstes, schützt den Benutzer vor Verletzungen.

Infolge des von innen nach aussen wachsenden Spulendurchmessers der einzelnen Spulenkörper wächst gleichzeitig der schnurformende Biegeradius. Dies wirkt sich besonders vorteilhaft auf die Schnur aus, die beim Abziehen sehr gerade herausfliesst und nicht wie bei zu kleinen Spulen zum Kringeln neigt. Namentlich bei Schnüren von grösserem Durchmesser lässt sich das mit herkömmlichen Mitteln nicht erreichen.

Sind die Spulenkörper aus transparentem Kunststoff, so kann die jeweils vorhandene Schnurkapazität visuell (optisch) festgestellt werden, ohne dass die Dose geöffnet oder demontiert werden müsste.

Weitere Merkmale, Einzelheiten und Vorteile der Erfindung ergeben sich aus der folgenden Beschreibung von Ausführungsbeispielen anhand der Zeichnung. Darin zeigen:

Fig. 1 eine Seitenansicht einer Spendedose nach der Erfindung, teilweise im Axialschnitt,

Fig. 2 die Dose von Fig. 1 in Draufsicht mit teilweise weggebrochenem Deckel,

Fig. 3 eine Seitenansicht ähnlich Fig. 1 einer abgewandelten Bauform und

Fig. 4 noch eine andere Ausführungsform einer erfindungsgemässen Spendedose, ebenfalls in Seitenansicht mit teilweise weggebrochener Seitenwandung.

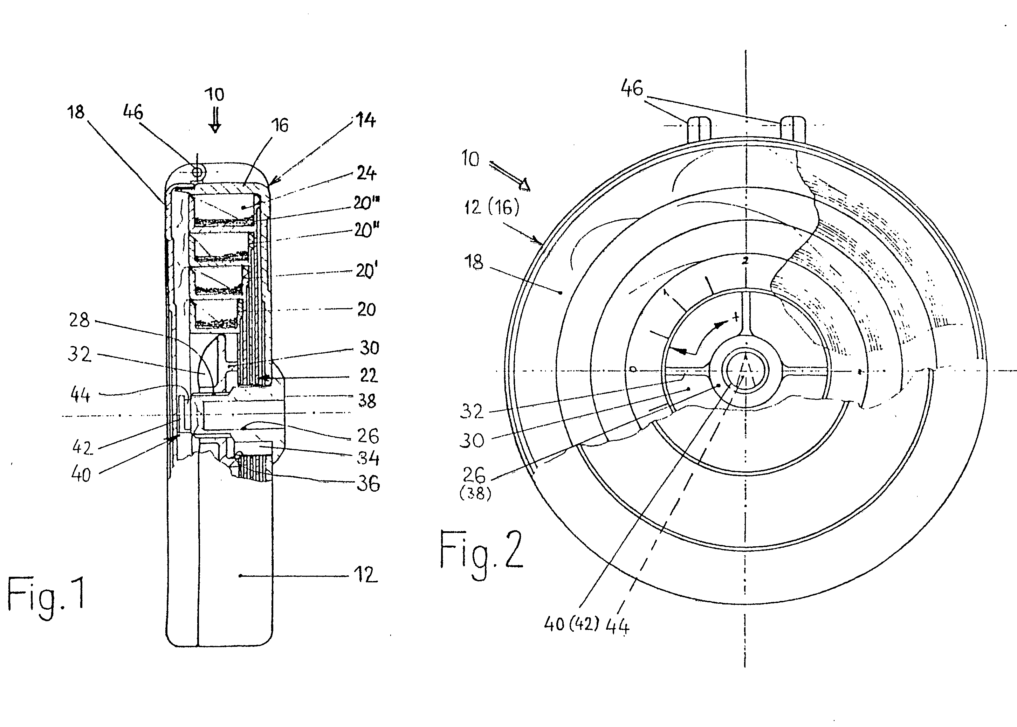

Das Ausführungsbeispiel von Fig. 1 und 2 ist eine Spendedose 10, die ein Gehäuse 12 mit kreisrunder Platte 14 aufweist, deren Seitenwandung 16 die Platte 14 umrahmt. Über ein bewegliches, zerlegbares Scharnier 46 ist das Gehäuse 12 mit einem Deckel 18 verbunden, der auch kreisrund ist und von einer Seitenwandung umrahmt wird.

In dem Gehäuse 12 ist eine Gruppe von Spulenkörpern 20, 20', 20'', 20''' so eingepasst, dass der Spulenkörper 20''' mit dem grössten Spulendurchmesser den Gehäuseinnenrand tangential oder überlappend berührt. In diesen äussersten Spulenkörper 20''' ist ein gleichartiger kleinerer Spulenkörper 20'' eingesetzt, darin seinerseits ein kleinerer Spulenkörper 20', der wiederum einen noch kleineren, innersten Spulenkörper 20 umgibt. Die Anzahl der Spulen könnte noch beliebig erweitert werden, doch wäre die Handlichkeit nicht mehr gewährleistet, wenn die Spendedose 10 im Aussendurchmesser vergrössert werden müsste.

Die Spulenkörper 20, 20' usw. haben jeweils eine kreisförmige Grundplatte 22 und ein davon nach einer Seite abstehendes Wickelfach 24. Dessen Aussendurchmesser ist so bemessen, dass er den Innenrand des jeweils äusseren, benachbarten Wickelfaches 24 tangential oder überlappend berührt. Alle Spulenkörper sind mit ihrer Grundplatte 22 auf einer Zentralbuchse 26 gelagert, die einen Gewindeteil 28 von kleinerem Durchmesser hat. Hiermit schraubt ein Gegenstück 30, das Handhaben 32 aufweist. Eine Verrastung beispielsweise in Form einer zur Längsachse des Gewindeteils 28 parallelen Nase und einer formgleichen Gehäuseausnehmung 36 kann die Spulenkörper 20, 20' usw. gegenüber dem Gehäuse 12 vor dem Verdrehen sichern. Mittels der Zentralbuchse 26 und des Gegenstücks 30 werden die Spulen gegeneinander und gegen das Gehäuse 12 gezogen; dazwischen werden die (schematisch angedeuteten) Schnüre eingeklemmt. Die mit einer Kappe 38 am Gehäuseboden aussen anliegende Zentralbuchse 26 ragt bis zur Ebene der fluchtenden Wickelfachränder und haltert einen Schneidenträger 40, der unter einer Abdeckung 42 eine Klinge oder Messerschneide 44 aufweist, mit der die passende Länge der benötigten Schnur getrennt wird. Die Abdeckung 42 kann zusätzlich als innerer Anschlag für den Deckel 18 fungieren.

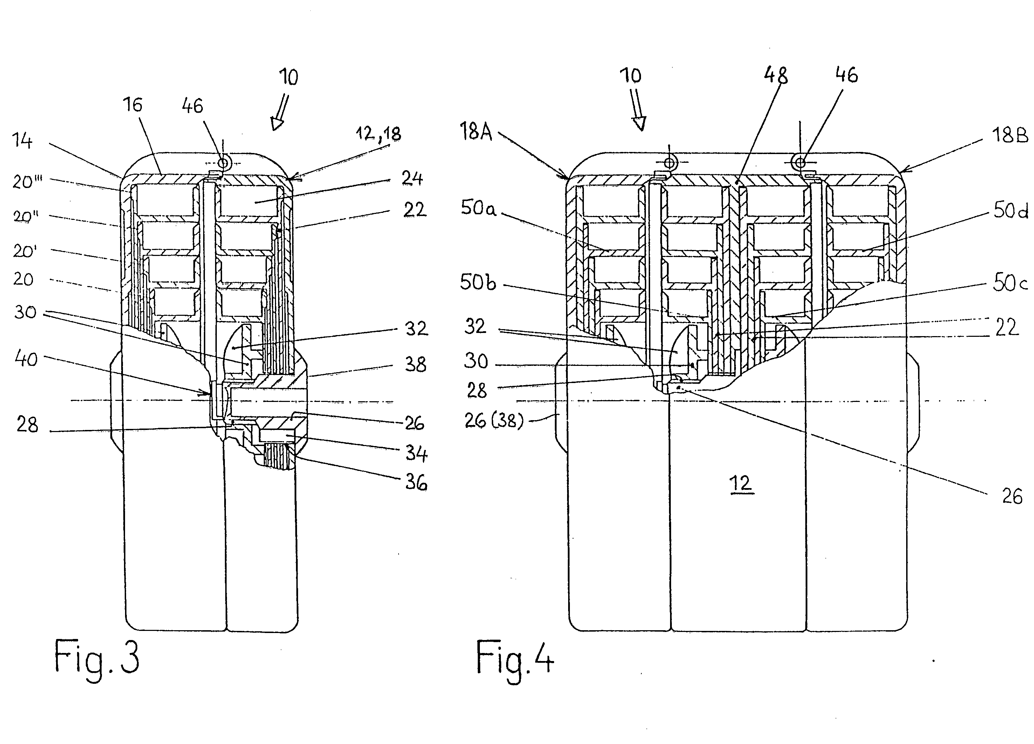

Man erkennt, dass die Spendedose 10 nach Fig. 1 und 2 *einen* Raum enthält, in dem die Spulen und anderen Bauteile Platz finden. Hingegen umfasst die Ausführungsform gemäss Fig. 3 zwei solcher Räume dank einer doppelreihigen oder zweischaligen Spendedose 10 mit beidseitiger Anordnung der Spulenkörper 20, 20' usw., wobei der Deckel 18 ebenso ausgebildet ist wie das Gehäuse 12.

Eine weitere Ausführungsform, bei der die Spendedose 10 *mehr als zwei* Räume enthält, in denen die Spulen und andere Bauteile angeordnet sind, ist aus Fig. 4 ersichtlich. Hierbei trägt ein Mittelteil 48 zwei Scharniere 46, an denen beiderseits Deckel 18A, 18B angelenkt sind. An jedem Deckel 18A, 18B ist jeweils eine Spulenkörper-Gruppe 50a bzw. 50d befestigt, während der Mittelteil 48 zwei Spulenkörper-Gruppen 50b und 50c trägt. Für die mittlere Verschraubung kann eine Zentralbuchse 26 ohne Kappe benutzt werden, die den Mittelteil 48 symmetrisch durchsetzt. Eine solche mehrreihige Anordnung ist wiederum beliebig erweiterbar, wenngleich eine zu grosse axiale Länge zu einer Einbusse an Handlichkeit führt.

Wesentliche Vorteile der erfindungsgemässen Vorfachdose bestehen darin,

dass sie kleinste Abmessungen hat,

dass vorstehende Teile an der Dose vermieden sind,

dass die Schnur-Enden im Ruhezustand sicher gehalten sind und die Klemmwirkung auch bei Nässe gewährleistet ist,

dass die Schnur mit definiertem bzw. reproduzierbar nachstellbarem Reibwiderstand aus der Dose abziehbar ist,

dass die Schnur in jeder Länge abtrennbar ist und

dass verschiedenen Schnurdurchmessern entsprechende Biegeradien (Wickeldurchmesser) zugeordnet sind, so dass die abgezogene Schnur nicht zum Kringeln neigt.

Die geschlossene Spendedose 10 ist jedenfalls eine begrenzte Zeit lang schwimmfähig, kann also leicht wieder geborgen werden, wenn sie einmal ins Wasser fällt. Sie muss aussen nicht unbedingt glatt sein, da eine leicht aufgerauhte Aussenfläche die Handhabung erleichtert. Bevorzugt besteht das Gehäuse aus Kunststoffen wie Polypropylen, ABS, Polyamid o.dgl. Die Spulenkörper sind zweckmässig aus einem transparenten Kunststoff wie Polycarbonat. Für die Zentralbuchse eignen sich Werkstoffe wie Polyacetalharz, Polyoximethylen o.dgl.

In den Rahmen der Erfindung fallen zahlreiche Abwandlungen. So kann das Scharnier statt als Stiftgelenk 46 ein Film- oder Folienscharnier sein. Das Gehäuse kann Vertiefungen aufweisen, in denen sich eventuelle Kennzeichnungen, Etikette o.dgl. anbringen lassen. Eine Markierung (in willkürlich wählbaren Einheiten) kann das Einstellen der Anpresskraft erleichtern. Statt der angegebenen Verdrehsicherung können auch an der Bodenplatte oder an der Spulen-Grundplatte Stehbolzen vorhanden sein, welche vorgegebene oder erst bei der Montage erzeugte Löcher durchdringen. Der Schneidenträger kann eine auswechselbare Klinge haltern, für die ein einseitiger Anschliff genügt, doch sind — wenn eine Kante abgedeckt wird — auch zweiseitig angeschliffene Schneidmesser geeignet.

## Patentansprüche

1. Vorrats- und Spendedose (10) für Angelschnüre oder ähnliche Fäden, mit einem abdeckbaren Gehäuse (12) zur Aufnahme einer Anzahl von Spulenkörpern (20, 20' usw.) an wenigstens einer Seite einer mit einer Seitenwandung (16) versehenen Platte (14), dadurch gekennzeichnet, dass die Spulenkörper (20, 20' usw.) jeweils eine Grundplatte (22) sowie ein davon am Umfang nach einer Seite hin abstehendes Wickelfach (24) aufweisen und unterschiedliche Grössen (Durchmesser) haben, dass sie sich ineinandergeschachtelt jeweils entlang einer Umfangslinie berühren, wobei der äusserste Spulenkörper (20''') am Innenumfang des Gehäuses (12) oder seines Deckels (18) Linienberührung hat, und dass eine zentrale Verschraubung (26, 28, 30) sowie ein Fadenschneider (40, 44) vorhanden sind.

2. Dose nach Anspruch 1, dadurch gekennzeichnet, dass die Spulenkörper (20, 20' usw.) kreisrund sind, indem die Grundplatte (22) jeweils scheibenförmig ist und ein ringförmiges Wickelfach (24) trägt.

3. Dose nach Anspruch 1 oder 2, dadurch gekennzeichnet, dass die Spulenkörper (20, 20' usw.) gegenüber dem Gehäuse (12) bzw. Deckel (18) drehfest und mit einstellbarer Axialspannung gelagert sind, insbesondere auf einer schraubbaren Zentralbuchse (26).

4. Dose nach Anspruch 3, dadurch gekennzeichnet, dass die Zentralbuchse (26) einen abgesetzten Gewindeteil (28) hat, der mit einem in den innersten Spulenkörper (20) einpassbaren, ihn belastenden Gegenstück (30) schraubt, welches Handhaben (32) Werkzeugansätze o.dgl. aufweist.

5. Dose nach Anspruch 3 oder 4, dadurch gekennzeichnet, dass als Verdrehsicherung eine Nase (34), ein Vorsprung, Stehbolzen o.dgl. und wenigstens eine zugehörige formschlüssige Ausnehmung (36) vorgesehen sind.

6. Dose nach einem der Ansprüche 1 bis 5, dadurch gekennzeichnet, dass der Fadenschneider (40, 44) am Gehäuse (12) als auswechselbare und/oder versetzbare Schneideinrichtung ausgebildet ist.

7. Dose nach Anspruch 6, dadurch gekennzeichnet, dass an dem inneren Ende der Zentralbuchse (26) ein Kunststoffkörper als Schneidenträger (40) angeordnet ist, der mit Zapfen versehen und in achsparallele Bohrungen der Zentralbuchse (26) einsteck- und/oder verrastbar ist.

8. Dose nach Anspruch 6 oder 7, dadurch gekennzeichnet, dass der Schneidenträger (40) eine Abdeckung (42) hat, die zugleich als innerer Anschlag für den Deckel (18) dient.

9. Dose nach wenigstens einem der Ansprüche 1 bis 8, dadurch gekennzeichnet, dass Gehäuse (12) und Deckel (18) mittels eines abnehm- oder zerlegbaren Scharniers (46) miteinander verbunden und/oder baukastenartig erweiterbar sind.

10. Dose nach Anspruch 9, dadurch gekennzeichnet, dass das Gehäuse (12) einen Mittelteil (48) mit beidseitig daran befestigten Spulenkörper-Gruppen (50a, 50b) und zwei scharniergelagerten Deckeln (18A, 18B) aufweist, die ihrerseits je eine Spulenkörper-Gruppe (50c, 50d) enthalten.

## Claims

1. Storage box and dispenser (10) for leader materials or similar filaments, having a housing (12) adapted to be covered for receiving a plurality of spools (20, 20', etc.) on at least one side of a plate (14) comprising a lateral wall (16), wherein each spool (20, 20', etc.) has a base plate (22) and adjacent its periphery a winding compartment (24) projecting towards one side, the spools having different sizes (diameters) and being nested into each other, wherein they contact each other along their respective peripheries, the outermost spool (20''') having line contact with the internal periphery of the housing (12) or its cover (18), and wherein a central screwing (26, 28, 30) as well as a thread-cutting device are provided.

2. Box as claimed in Claim 1, wherein the spools (20, 20', etc.) are circular, each base plate (22) having the form of a disk and bearing an annular winding compartment (24).

3. Box as claimed in Claim 1 or 2, wherein the spools (20, 20', etc.) are mounted, with respect to the housing (12) or cover (18), in a non-rotatory fashion and under adjustable axial tension, specially on a central bush (26) adapted to be screwed.

4. Box as claimed in Claim 3, wherein the central bush (26) has a set-off threaded portion (28) which screws with a counterpart (30) adapted to be fitted in the innermost spool (20) so as to bias it, said counterpart (30) being provided with handles (32), studs for applying tools or the like.

5. Box as claimed in Claim 3 or 4, wherein a nose (34), a projection, a stud bolt or the like and at least one associated matching recess (36) are provided as means to prevent rotation.

6. Box as claimed in one of the Claims 1 to 5, wherein the thread cutter (40, 44) on the housing (12) is formed as an exchangeable and/or displaceable cutting device.

7. Box as claimed in Claim 6, wherein a body of synthetic material serving as carrier for the cutting blades (40) is disposed on the inner end of the central bush (26), is provided with gudgeons and is adapted to be plugged and/or locked in bores of the central bush (26) disposed parallel to its axis.

8. Box as claimed in Claim 6 or 7, wherein the carrier of the cutting blades (40) has a cover (42) which also serves as an internal stop to the cover (18).

9. Box as claimed in at least one of the Claims 1 to 8, wherein the housing (12) and the cover (18) are coupled to each other and/or matizised by means of a removable or dismountable hinge (46).

10. Box as claimed in Claim 9, wherein the housing (12) has a central part (48) with groups of spools (50a, 50b) mounted thereon on either side and has two hinge-borne covers (18A, 18B) which in turn contain one group of spools (50c, 50d) each.

## Revendications

1. Boîte de stockage et de distribution pour ligne de pêche ou de fil similaire, avec une cage recouvrable (12) pouvant loger un certain nombre de corps de bobines (20, 20', etc.) sur au moins un des flancs d'une plaque (14) munie d'une paroi latérale (16), caractérisée en ce que les corps des bobines (20, 20', etc.) présentent chacun une plaque de base (22) et une case de bobinage (24) émergeant d'un côté du périmètre de la plaque (22), les corps des bobines (20, 20', etc.) ayant des dimensions (diamètres) différents, en ce qu'ils sont intercalés et respectivement en contact entre eux selon une ligne périphérique, le corps de bobine le plus externe (20'') touchant la ligne sur le périmètre intérieur de la cage (12) ou de son couvercle (18), et en ce que la boîte présente un vissage central (26, 28, 30) et un coupe-fil (40, 44).

2. Boîte suivant la revendication 1, caractérisée en ce que les corps des bobines (20, 20', etc.) sont de forme circulaire, la plaque de base (22) ayant respectivement la forme d'un disque et soutenant une case de bobinage (24) en forme d'anneau.

3. Boîte suivant la revendication 1 ou 2, caractérisée en ce que les corps des bobines (20, 20', etc.) sont logés, par rapport à la cage (12) ou au couvercle (18), de façon à résister à la torsion et avec une tension axiale réglable, en particulier sur une douille centrale vissable (26).

4. Boîte suivant la revendication 3, caractérisée en ce que la douille centrale (26) présente une partie de filet décalée (28) qui se laisse visser sur un pendant (30) adaptable dans le corps de bobine le plus interne (20) en le chargeant, le pendant (30) présentant des manipulateurs (32), des talons pour outils ou des dispositifs analogues.

5. Boîte suivant la revendication 3 ou 4, caractérisée en ce que, comme résistance à la torsion, sont prévus un toc (34), une saillie, un boulon fileté ou un objet analogue, et au moins un creux (36) associé à fermeture géométrique.

6. Boîte suivant une des revendications 1 à 5, caractérisée en ce que le coupe-fil (40, 44) sur la cage (12) est formé en guise de dispositif de coupe interchangeable et/ou déplaçable.

7. Boîte suivant la revendication 6, caractérisée en ce que sur le bout interne de la douille centrale (26) est disposé un corps en matière plastique comme porte-lame (40), pourvu de tourillons et enfichable et/ou enclenchable dans des perçages aux axes parallèles se trouvant sur la douille centrale (26).

8. Boîte suivant la revendication 6 ou 7, caractérisée en ce que le porte-lame (40) possède un chapeau (42) servant en même temps comme butée intérieure pour le couvercle (18).

9. Boîte suivant au moins une des revendications 1 à 8, caractérisée en ce que la cage (12) et le couvercle (18) sont reliés entre eux et/ou extensibles selon le principe modulaire au moyen d'une charnière (46) détachable ou démontable.

10. Boîte suivant la revendication 9, caractérisée en ce que la cage (12) présente une partie médiane (48) avec des groupes de corps de bobines qui y sont attachés (50a, 50b) des deux côtés et avec deux couvercles logés parmi des charnières (18A, 18B) qui a leur tour contiennent chacun un groupe de corps de bobines (50c, 50d).

Fig.1

Fig.2

0 093 269

Fig.3

Fig.4

0 093 269